# FASCICULE DE BREVET EUROPEEN

(11) **EP 2 818 965 B1**
(45) Date de publication et mention de la délivrance du brevet: **31.10.2018**
(21) Numéro de dépôt: 14173896.3
(22) Date de dépôt: 25.06.2014
(51) Int. Cl.: G06F 1/16, G06F 3/0481, G06F 3/0346

(54) **Procédé d'interaction entre un objet numérique, représentatif d'au moins un objet réel ou virtuel localisé dans un périmètre géographique distant, et un dispositif de pointage local**
Interaktionsverfahren zwischen einem digitalen Objekt, das mindestens für einen wirklichen oder virtuellen Gegenstand repräsentativ ist, der sich in einem entfernten geografischen Bereich befindet, und einem lokalen Anzeigesystem
Method for interaction between a digital object, representative of at least one real or virtual object located in a remote geographical perimeter, and a local pointing device

(30) Priorité: 27.06.2013 FR 1356207
(43) Date de publication de la demande: 31.12.2014
(73) Titulaire: Orange, 75015 Paris (FR)
(72) Inventeur: Romano, Philippe, 06800 Cagnes sur Mer (FR); Griaudon, Vincent, 06600 Antibes (FR); Bruno, Adrien, 06130 Grasse (FR)
(74) Mandataire: Vidon Brevets & Stratégie

(56) Documents cités:
- US-A1- 2003 193 572
- US-A1- 2007 236 381
- US-A1- 2011 095 978

## Description

### 1. DOMAINE DE L'INVENTION

Le domaine de l'invention est celui des systèmes d'information géographique (SIG) associés chacun à un périmètre géographique et comprenant un équipement (aussi appelé équipement central) accédant à une base de données. Cette base de données référence une pluralité d'objets numériques et mémorise une position dans le périmètre géographique pour chacun de ces objets numériques. Chaque objet numérique est représentatif d'au moins un objet réel ou virtuel localisé dans un périmètre géographique. Chaque objet numérique possède un identifiant et est défini dans la base de données par une composante géométrique définissant une position géographique de l'objet numérique dans le périmètre géographique associé au SIG et par une composante descriptive définissant au moins un attribut descriptif. L'équipement est adapté pour déterminer, en fonction des positions des objets numériques dans le périmètre géographique et d'informations sur la position et l'orientation d'un dispositif de pointage donné, si la position d'un des objets numériques est pointée par le dispositif de pointage donné.

Plus précisément, l'invention concerne une technique d'interaction entre au moins un objet numérique, représentatif d'au moins un objet réel ou virtuel localisé dans un périmètre géographique distant, et un dispositif de pointage local, utilisé dans un périmètre géographique local.

### 2. ARRIÈRE-PLAN TECHNOLOGIQUE

Un exemple de système d'information géographique adapté pour être utilisé avec un dispositif de pointage est décrit dans la demande de brevet français déposée le 29 mars 2012, sous le numéro FR1252873 et au nom de France Telecom.

Dans la demande FR1252873, il est rappelé que dans les techniques antérieures, pour déterminer si un dispositif de pointage pointe (c'est-à-dire est dirigé vers) un dispositif cible (dispositif pointé), le dispositif de pointage et le dispositif pointé doivent être prévus pour fonctionner ensemble (l'un comprend un émetteur et l'autre un récepteur apte à détecter un signal émis par l'émetteur). Par exemple, un téléviseur comprend typiquement un récepteur infrarouge capable de recevoir des signaux infrarouges émis par un boîtier de télécommande fourni avec ce téléviseur.

L'inconvénient majeur de ces techniques antérieures est qu'il est nécessaire d'établir un canal de communication entre le dispositif de pointage et le dispositif pointé (grâce au couple émetteur/récepteur), ce qui a conduit à la réalisation de matériels spécifiques à chaque fabriquant, peu évolutifs et entraînant leur multiplicité.

La technique proposée dans la demande FR1252873 (et dont le fonctionnement est détaillé plus bas en relation avec les **figures 1** **et** **2**) consiste à utiliser un équipement central pour déterminer quel(s) dispositif(s) est(sont) pointé(s) par le dispositif de pointage. Cette technique offre ainsi plusieurs avantages par rapport aux techniques antérieures précitées. En effet, c'est l'équipement central qui obtient une information de pointage tridimensionnel, c'est-à-dire une information indiquant vers quel(s) dispositif(s) pointé(s) est orienté physiquement le dispositif de pointage, dans un espace à trois dimensions. Il n'est donc pas nécessaire que le dispositif de pointage et le ou les dispositifs pointés soient conçus pour fonctionner ensemble (pas de nécessité que l'un comprenne un émetteur et l'autre un récepteur adapté à cet émetteur). Pour l'équipement central, la connaissance de l'information de pointage tridimensionnel permet de créer une association entre le dispositif de pointage et le ou les dispositifs pointés. Il est possible de créer des applications découlant de cette association (notamment, mais non exclusivement, pour commander le dispositif pointé par le dispositif de pointage).

Cependant, la technique de la demande FR1252873 peut encore être améliorée, afin d'améliorer les usages et les interactions, notamment des interactions à distance avec un système d'information géographique (en utilisant un dispositif de pointage qui n'est pas présent dans le périmètre géographique de ce système d'information géographique).

Le document US2011/0095978-A1 décrit un procédé de commande d'objets, les objets à commander étant disposés dans un espace réel. L'espace réel est lié à un espace de représentation multi-dimensionnel par une règle de transformation. Les représentations dans l'espace de représentation sont associées aux objets à commander par une correspondance (mapping). La méthode comprend des étapes de détermination de la position et l'orientation d'un pointeur dans l'espace réel, détermination de la position et l'orientation d'une représentation du pointeur associée au pointeur dans l'espace de représentation en utilisant la position et l'orientation du pointeur dans l'espace réel et la règle de transformation, détermination des représentations dans l'espace de représentation qui sont intersectées par la représentation du pointeur, sélection d'une représentation qui est intersectée par la représentation du pointeur, et contrôle de l'objet dans l'espace réel qui est associé avec la représentation intersectée sélectionnée.

### 3. EXPOSÉ DE L'INVENTION

Dans un mode de réalisation particulier de l'invention, il est proposé un procédé d'interaction tel que défini par la revendication 1. Le procédé permet une interaction entre au moins un objet numérique, représentatif d'au moins un objet réel ou virtuel localisé dans un premier périmètre géographique, et un dispositif de pointage, utilisé dans un deuxième périmètre géographique distinct du premier périmètre géographique. Un équipement accède à une première base de données référençant un ou plusieurs objets numériques et mémorisant une position géographique dans le premier périmètre géographique pour chacun de ces objets numériques. Le procédé comprend les étapes suivantes :
- établissement d'un premier canal de communication entre l'équipement et un dispositif de suivi, apte à obtenir des informations de pointage du dispositif de pointage ;
- réception, par l'équipement, via le premier canal de communication, d'informations de pointage représentant une orientation réelle du dispositif de pointage dans le deuxième périmètre géographique ;
- identification, par l'équipement, en fonction d'une part des informations de pointage reçues et d'autre part d'une position virtuelle de départ et d'une orientation virtuelle de départ attribuées au dispositif de pointage dans le premier périmètre géographique, d'un objet numérique du premier périmètre géographique dont la position géographique est pointée virtuellement par le dispositif de pointage.

Selon une caractéristique particulière, le procédé comprend les étapes suivantes :
- transmission au dispositif de suivi, via le premier canal de communication, d'informations d'interactions, relatives à des interactions disponibles ou effectuées sur l'objet numérique identifié ;
- transmission par le dispositif de suivi vers un dispositif de commande (confondu ou non avec l'équipement), via un deuxième canal de communication (confondu ou non avec le premier canal de communication), de commandes d'interactions, relatives à des interactions à effectuer sur l'objet numérique identifié.

Le principe général de l'invention consiste donc à transmettre à un équipement distant (aussi appelé équipement central d'un système d'information géographique distant, ou SIG distant) des informations de pointage se rapportant au dispositif de pointage local. Ceci permet à l'équipement distant de déterminer si le dispositif de pointage local pointe virtuellement vers la position d'un des objets numériques du périmètre géographique distant. Ainsi, l'utilisateur peut faire usage du dispositif de pointage local (non présent dans le périmètre géographique distant) pour pointer virtuellement des objets numériques de ce périmètre géographique distant, comme s'il se trouvait à une position déterminée dans le périmètre géographique distant.

Par dispositif de suivi local, on entend par exemple le dispositif de pointage ou un équipement local (aussi appelé équipement central d'un système d'information géographique local, ou SIG local).

Selon une caractéristique particulière, le procédé comprend les étapes suivantes :
- transmission au dispositif de suivi local, via le canal de communication, d'informations d'interactions, relatives à des interactions disponibles ou effectuées sur l'objet numérique identifié ; et
- réception par l'équipement distant, via le canal de communication, de commandes d'interactions, relatives à des interactions à effectuer sur l'objet numérique identifié.

Ainsi, l'utilisateur peut faire usage du dispositif de pointage local pour interagir avec des objets numériques du périmètre géographique distant, comme s'il se trouvait à une position déterminée dans le périmètre géographique distant.

Selon une caractéristique particulière, une base de données locale référence un ou plusieurs objets numériques, représentatifs d'objets réels ou virtuels localisés dans le périmètre géographique local et mémorise une position dans le périmètre géographique local pour chacun de ces objets numériques. En outre, l'étape d'établissement du canal de communication est déclenchée par une détection d'un événement appartenant au groupe comprenant :
- le dispositif de pointage local pointe sur la position d'un objet numérique particulier localisé dans le périmètre géographique local, provoquant une activation automatique d'une fonction associée audit objet numérique particulier;
- un utilisateur active, via une interface homme-machine du dispositif de pointage local, une fonction associée à un objet numérique localisé dans le périmètre géographique local et dont la position est pointée par le dispositif de pointage local ;
- un utilisateur active, via une interface homme-machine du dispositif de pointage local, une fonction particulière associée à un objet numérique qui est localisé dans le périmètre géographique distant et qui est associé à un objet numérique localisé dans le périmètre géographique local et dont la position est pointée par le dispositif de pointage local.

Selon une caractéristique particulière, l'étape d'établissement du (premier) canal de communication est déclenchée par une détection d'un événement appartenant au groupe comprenant :
- un utilisateur effectue un geste particulier avec le dispositif de pointage local ;
- un utilisateur utilise une interface homme-machine du dispositif de suivi pour exécuter une fonction particulière ;
- un utilisateur utilise une interface homme-machine du dispositif de pointage local pour envoyer une commande particulière au dispositif de suivi ;
- un utilisateur utilise une interface homme-machine du dispositif de pointage local pour établir une connexion avec le dispositif de suivi.

Selon une caractéristique particulière, la position virtuelle de départ et/ou l'orientation virtuelle de départ sont :
- prédéterminées et stockées dans l'équipement distant ; ou
- déterminées relativement à un objet numérique du périmètre géographique distant ; ou
- choisies par un utilisateur via une interface homme-machine.

Selon une caractéristique particulière, le procédé comprend une étape de fourniture à un utilisateur, via une interface homme-machine du dispositif de pointage local, d'informations de guidage relatives à une position virtuelle courante et une orientation virtuelle courante déterminées pour le dispositif de pointage local dans le périmètre géographique distant.

Ainsi, l'utilisateur est guidé dans l'orientation virtuelle, au sein du périmètre géographique distant, du dispositif de pointage local. Les informations de guidage sont par exemple fournies sous la forme d'un son spatialisé ou d'une modélisation graphique.

Selon une caractéristique particulière, le procédé comprend une étape de création d'au moins groupe d'objets numériques associés, chaque groupe associant au moins un objet numérique du périmètre géographique local avec au moins un objet numérique du périmètre géographique distant.

De cette façon, des objets numériques du périmètre géographique local peuvent coopérer avec des objets numériques du périmètre géographique distant. On généralise ainsi la notion d'association entre deux objets numériques, décrite pour deux objets numériques d'un même SIG dans la demande de brevet français déposée le 21 décembre 2012, sous le numéro FR1262596 et au nom de France Telecom.

Selon une caractéristique particulière, le procédé comprend une étape de création d'un nouvel objet numérique du périmètre géographique distant.

Dans un autre mode de réalisation de l'invention, il est proposé un produit programme d'ordinateur tel que défini par la revendication 9.

Dans un autre mode de réalisation de l'invention, il est proposé un médium de stockage lisible par ordinateur et non transitoire, tel que défini par la revendication 10.

Dans un autre mode de réalisation de l'invention, il est proposé un équipement tel que défini par la revendication 11.

Avantageusement, l'équipement central du système d'information géographique distant comprend des moyens de mise en oeuvre des étapes qu'il effectue dans le procédé tel que décrit précédemment, dans l'un quelconque de ses différents modes de réalisation.

### 4. LISTE DES FIGURES

D'autres caractéristiques et avantages de l'invention apparaîtront à la lecture de la description suivante, donnée à titre d'exemple indicatif et non limitatif, et des dessins annexés, dans lesquels :
- la figure 1 est un synoptique illustrant un mécanisme de gestion du pointage d'un dispositif cible par un dispositif de pointage, grâce à un système d'information géographique selon la technique de la demande FR1252873 ;
- la figure 2 est un organigramme illustrant l'algorithme exécuté par le système d'information géographique dans le mécanisme de gestion du pointage illustré sur la figure 1 (technique de la demande FR1252873) ;
- les figures 3 et 3bis présentent la structure d'un dispositif de pointage et d'un équipement central respectivement, selon un mode de réalisation particulier de l'invention ;
- la figure 4 présente un organigramme d'un mode de réalisation particulier du procédé selon l'invention ;
- la figure 5 illustre une première mise en oeuvre de la technique de l'invention, avec établissement d'un canal de communication entre l'équipement central d'un SIG local et l'équipement central d'un SIG distant ;
- la figure 6 illustre une deuxième mise en oeuvre de la technique de l'invention, avec établissement d'un canal de communication entre le dispositif de pointage et l'équipement central d'un SIG distant ;
- les figures 7a à 7f illustrent le résultat des étapes successives de l'organigramme de la figure 4, à travers un premier exemple (correspondant à la première mise en oeuvre illustrée sur la figure 5) ;
- les figures 8a à 8d illustrent le résultat des étapes successives de l'organigramme de la figure 4, à travers un deuxième exemple (correspondant à la deuxième mise en oeuvre illustrée sur la figure 6) ;
- la figure 9 illustre une troisième mise en oeuvre de la technique de l'invention ;
- la figure 10 illustre une quatrième mise en oeuvre de la technique de l'invention.

### 5. DESCRIPTION DÉTAILLÉE

Sur toutes les figures du présent document, les éléments et étapes identiques sont désignés par une même référence numérique.

### 5.1 Rappel de la technique de la demande FR1252873

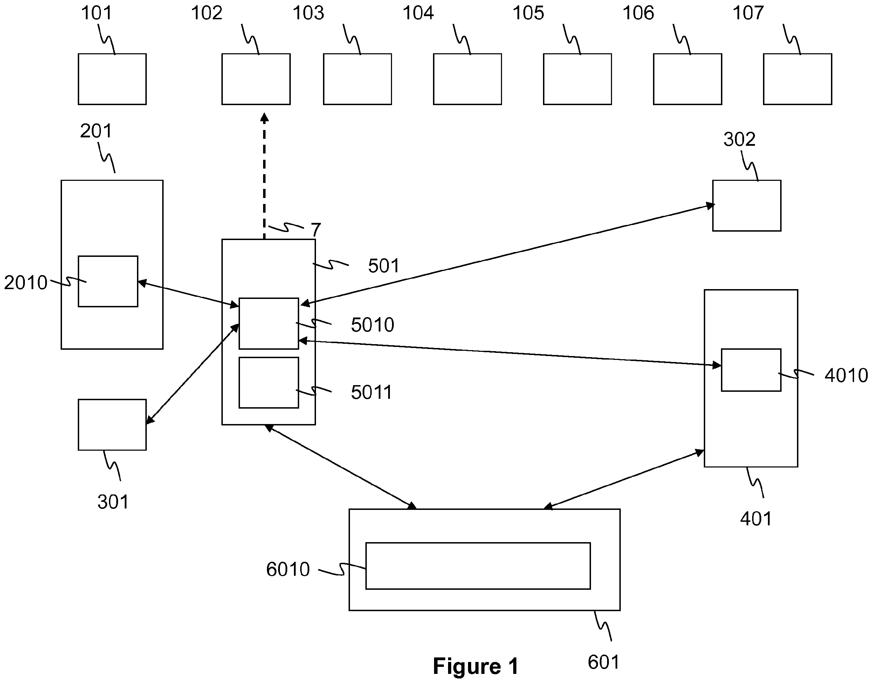

On présente maintenant, en relation avec la **figure 1**, un mécanisme de gestion du pointage d'un dispositif cible (objet réel) par un dispositif de pointage, grâce à un système d'information géographique (SIG) selon la technique de la demande FR1252873.

Dans cet exemple, le système comprend :
- des appareils 101 à 107 (par exemple une porte 101, un vidéo projecteur 102, un appareil d'obturation 103, un décodeur 104, un dispositif de réseau LAN IP 105, une imprimante IP 106, un autocommutateur téléphonique privé (PBX) 107...) qui n'embarquent pas de module de localisation ;
- des appareils 301, 302 qui sont uniquement des modules de localisation ;
- des appareils 201, 401 (par exemple un téléviseur 201 et un équipement réseau (routeur, passerelle, décodeur) 401) qui embarquent un module de localisation 2010, 4010 permettant de déterminer leurs positions (automatiquement, par calcul avec l'aide de l'équipement central 601) ;
- des appareils (dans un souci de simplification de la figure 1, un seul référencé 501 y est représenté) qui sont des terminaux mobiles (smartphones, tablettes, ordinateurs portables, baguettes magique, jouets...) qui embarquent un module de localisation 5010, ainsi qu'un ou plusieurs capteurs 5011 (accéléromètres, gyroscopes, boussoles...) permettant de déduire leur orientation dans un espace 3D ;
- un équipement central (aussi appelé calculateur) 601 qui agrège, calcule et manipule les informations (notamment les informations de position) relatives aux autres appareils précités 101 à 107, 201, 301, 302, 401, 501, et aux données environnementales et temporelles (plan, schémas...). Toutes ces données sont stockées dans une base de données 6010, appelée par la suite « base de données SIG » (avec l'acronyme SIG pour « Système d'Information Géographique »). La base de données SIG 6010 possède également une représentation en plan 2D et/ou 3D des bâtiments ou de la zone géographique dans laquelle se trouvent tous les appareils.

L'équipement central 601 est par exemple connecté à un réseau (local LAN, ou distant WAN comme dans une solution de type Cloud), par l'intermédiaire de l'équipement réseau 401. Dans une variante, l'équipement central 601 est intégré dans l'équipement réseau 401. L'équipement central 601 peut compléter et/ou actualiser automatiquement sa base de données SIG 6010. Un administrateur peut également ajouter ou modifier les données de la base de données SIG.

Dans une implémentation particulière, les modules de localisation 2010, 301, 302, 4010, 5010 sont des modules de localisation radio Ultra Large Bande (aussi appelés « modules ULB » ou « modules UWB » (pour « Ultra Wide Band » en anglais)). Ils forment un réseau de géolocalisation, permettant de déterminer les distances entre modules de localisation en utilisant des mesures du temps de vol. Dès qu'ils sont en nombre suffisant, il devient possible de déterminer la position de chacun des autres modules de localisation, par triangulation : à partir de mesures d'angles ou de mesures de distances relatives. Les modules de localisation sont autonomes, ils peuvent détecter et/ou signaler leur présence à des modules voisins (à portée de signal) et en informer l'équipement central 601.

Dans l'exemple de la figure 1, les positions (coordonnées en 3D x,y,z) des appareils 301, 302 (qui sont uniquement des modules de localisation) sont connues (positions de référence) et stockées dans la base de données SIG de l'équipement central 601.

Grâce aux modules de localisation 2010, 4010 embarqués dans les appareils 201, 401, les positions de ces derniers sont calculées automatiquement par l'équipement central 601 et stockées dans sa base de données SIG.

Ainsi, la connaissance des positions des appareils 201, 301, 302, 401, installés à des positions de références connues, permettent de déterminer (par calcul de triangulation) la position de chacun des terminaux mobiles 501. Par exemple, le module de localisation 5010, compris dans le terminal mobile 501, communique avec les modules de localisation des appareils 201, 301, 302, 401 placés à des positions connues. Ceci permet de déterminer des distances entre le module de localisation 5010 et les modules de localisation des appareils 201, 301, 302, 401. Puis, l'équipement central 601 obtient ces distances (elles lui sont transmises par le terminal mobile 501 et/ou par au moins un des appareils 201, 301, 302, 401). Enfin, l'équipement central 601 détermine la position du terminal mobile 501, par triangulation, en fonction des distances précitées et des positions connues des modules de localisation embarqués dans les appareils 201, 301, 302, 401. Dans ce but, une liaison de communication est établie entre, d'une part, l'équipement central 601, et d'autre part, le terminal mobile 501 et/ou les appareils 201, 301, 302. Cette liaison utilise par exemple un réseau Wifi local ou tout autre réseau auquel le terminal mobile 501 et/ou les appareils 201, 301, 302 accède.

Ainsi, l'équipement central 601 peut suivre en temps réel les déplacements de tous les terminaux mobiles (notamment celui référencé 501 sur la figure 1) qui comprennent un module de localisation. L'équipement central 601 prend en compte la dimension temporelle car les appareils (notamment les terminaux mobiles) peuvent être en mouvement. L'équipement central 601 est capable de gérer plusieurs dispositifs de pointages simultanément.

Toutes les positions (coordonnées en 3D x,y,z) des appareils 101 à 107 (qui ne comprennent pas de module de localisation) sont connues et stockées dans la base de données SIG 6010 de l'équipement central 601.

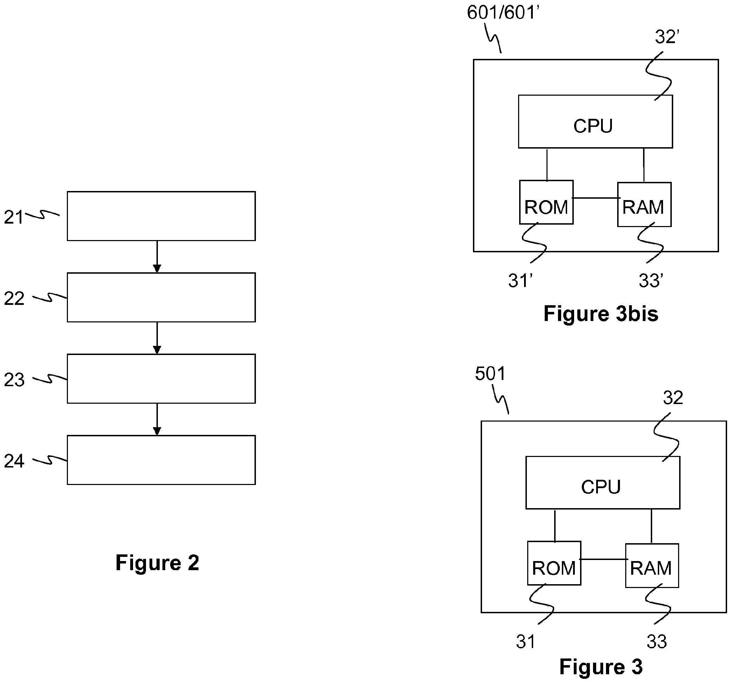

On présente maintenant, en relation avec l'organigramme de la **figure 2**, l'algorithme exécuté par l'équipement central (calculateur) 601 du système d'information géographique, dans le mécanisme de gestion du pointage illustré sur la figure 1 (technique de la demande FR1252873).

On cherche à déterminer vers quel(s) appareil(s) du système l'utilisateur dirige un dispositif de pointage, c'est-à-dire quel est ou quels sont les appareils pointés par le dispositif de pointage. Il s'agit d'offrir à l'utilisateur un moyen simple et naturel de désigner le(s) appareil(s) avec le(s)quel(s) il veut interagir.

A titre d'exemple illustratif, on suppose dans la suite de la description que le dispositif de pointage est le terminal mobile 501 et que l'utilisateur le pointe vers le vidéo projecteur 102. L'axe d'orientation du dispositif de pointage est symbolisé par la flèche en pointillés référencée 7 sur la figure 1.

Dans une étape 21, l'équipement central 601 obtient une information sur la position du terminal mobile 501 (dispositif de pointage). Comme expliqué ci-dessus (cf figure 1), grâce aux appareils 201, 301, 302, 401, la position du terminal mobile 501 est connue et suivie en temps réel par l'équipement central 601, qui centralise toutes les informations dans sa base de données SIG 6010.

Dans une étape 22, l'équipement central 601 obtient une information sur l'orientation du terminal mobile 501. Comme expliqué ci-dessus (cf figure 1), le terminal mobile 501 comprend un ou plusieurs capteurs (accéléromètres, gyroscopes, boussoles...) lui permettant de déduire son orientation et de transmettre cette information d'orientation au calculateur 601.

Dans une étape 23, l'équipement central 601 obtient une information sur la position des autres appareils 101 à 107, 201, 301, 302, 401 (dispositifs cibles). Comme expliqué ci-dessus (cf figure 1), ceci est effectué en lisant le contenu de la base de données SIG 6010 de l'équipement central 601.

Dans une étape 24, l'équipement central 601 détermine l'appareil ou le groupe d'appareils pointés par le terminal mobile 501, en fonction de :
- l'information sur la position du terminal mobile 501 ;
- l'information sur l'orientation du terminal mobile 501 ; et
- l'information sur les positions des autres appareils 101 à 107, 201, 301, 302, 401.

Il suffit à l'utilisateur de changer l'orientation et/ou la position du terminal mobile 501 pour désigner une ou plusieurs nouvelles cibles (appareil(s) pointé(s)).

Ainsi, avec la technique proposée, la position et l'orientation dans l'espace du terminal mobile 501 (dispositif de pointage), couplées aux positions des autres appareils (grâce au calculateur 601), suffisent pour déterminer le ou les appareils pointés par le terminal mobile 501. En fonction des applications, l'association entre le terminal mobile 501 (dispositif de pointage) et le ou les appareils pointés peut être utilisée de diverses manières. Notamment, mais non exclusivement, le terminal mobile 501 peut commander un appareil pointé, via l'équipement central 601 (donc sans communication directe entre dispositif de pointage et dispositif pointé).

### 5.2 Principe général de la technique proposée

Il est proposé une technique d'interaction entre un système d'information géographique distant (appelé par la suite système distant ou SIG distant) et un dispositif de pointage local (utilisé dans un périmètre géographique local), ce dernier étant utilisé ou non avec un système d'information géographique local (appelé par la suite système local ou SIG local).

Chaque système d'information géographique (local ou distant) est associé à un périmètre géographique et comprend un équipement central accédant à une base de données (aussi appelée « base de données SIG » par la suite) référençant des objets numériques et mémorisant une position dans ce périmètre géographique. Chaque objet numérique est un ensemble de données/informations, représentatif d'un objet, réel ou virtuel, localisé dans ce périmètre géographique. Chaque objet numérique est défini dans la base de données par :
- un identifiant ;
- une composante géométrique, définissant une position géographique de l'objet (réel ou virtuel) représenté par cet objet numérique (par exemple, la composante géométrique est définie par la position d'un unique point, ou bien par la position d'une pluralité de points formant une ligne ou définissant une surface) ; et
- une composante descriptive, définissant au moins un attribut descriptif de l'objet numérique (aussi appelé « propriété de l'objet numérique»).

Par attributs d'un objet numérique, on entend par exemple :
- des fonctions (aussi appelées « actions » ou encore « interactions ») exécutables par l'équipement central, le dispositif de pointage ou le dispositif pointé (exemples : une fonction de déclenchement de la mise en relation de deux systèmes d'information géographique, des fonctions permettant d'agir sur un objet réel dont l'objet numérique est une représentation, etc.) ;
- des objets multimédias (mémos virtuels, tableau virtuel (pour ces mémos virtuels), vidéos, photos, etc.), et des fonctions associées (par exemple lecture, pause, arrêt, etc.) permettant d'agir sur ces objets multimédias ;
- des liens (par exemple des adresses URL ou des adresse locales) permettant l'accès à des objets multimédias ;

Comme dans la technique de la demande FR1252873 (ou grâce à une technique alternative), l'équipement central est adapté pour déterminer, en fonction des positions (composantes géométriques) des objets numériques dans le périmètre géographique distant et d'informations sur la position et l'orientation d'un dispositif de pointage donné, si la position d'un des objets numériques est pointée par le dispositif de pointage donné. En d'autres termes, on utilise la technique de gestion du pointage décrite dans la demande FR1252873, ou une technique équivalente.

On distingue par exemple deux catégories d'objets numériques dans la base de données SIG 6010 (seule la première catégorie est mentionnée dans la demande FR1252873).

Première catégorie : les objets numériques représentatifs (c'est-à-dire qui sont des modèles) d'objets réels de l'environnement dans lequel est mis en oeuvre le système d'information géographique. Par exemple, pour un réfrigérateur qui est un objet réel, on peut créer et stocker dans la base de données SIG un objet numérique « réfrigérateur », dont la composante géométrique définit la position géographique du réfrigérateur. Plus généralement, les objets réels considérés (c'est-à-dire dont les modèles sont contenus dans la base de données SIG) peuvent être de toute nature : objets réels avec lesquels il est possible d'interagir grâce à l'équipement central et/ou le dispositif de pointage donné, ou bien objets réels avec lesquels il n'est pas possible d'interagir grâce à l'équipement central et/ou le dispositif de pointage donné).

Deuxième catégorie : les objets numériques représentatifs d'objets purement virtuels, dont la composante géométrique définit une position géographique indépendamment de la présence ou non d'un objet réel à cette position géographique. En d'autres termes, ce sont des objets numériques ne résultant pas de la modélisation d'un objet réel de l'environnement dans lequel est mis en oeuvre le système d'information géographique. Les objets numériques représentatifs d'objets purement virtuels possèdent une composante descriptive définissant un ou plusieurs attributs, comme par exemple :
- des fonctions (aussi appelées « actions » ou encore « interactions ») exécutables par l'équipement central, le dispositif de pointage ou le dispositif pointé ;
- des objets multimédias (mémos virtuels, tableau virtuel (pour ces mémos virtuels), vidéos, photos, etc.) ; ou
- des liens (par exemple des adresses URL ou des adresse locales) permettant l'accès à des objets multimédias stockés sur d'autres équipements (par exemple des serveurs distants ou des dispositifs de stockage locaux).

L'utilisation de ces objets numériques représentatifs d'objets purement virtuels est par exemple la suivante :
si la position d'un objet numérique représentatif d'un objet purement virtuel est pointée par un dispositif de pointage, l'équipement central permet au dispositif de pointage d'effectuer la ou les action(s) listée(s) dans la composante descriptive de cet objet numérique (on parle également d'action(s) associée(s) à cet objet numérique).

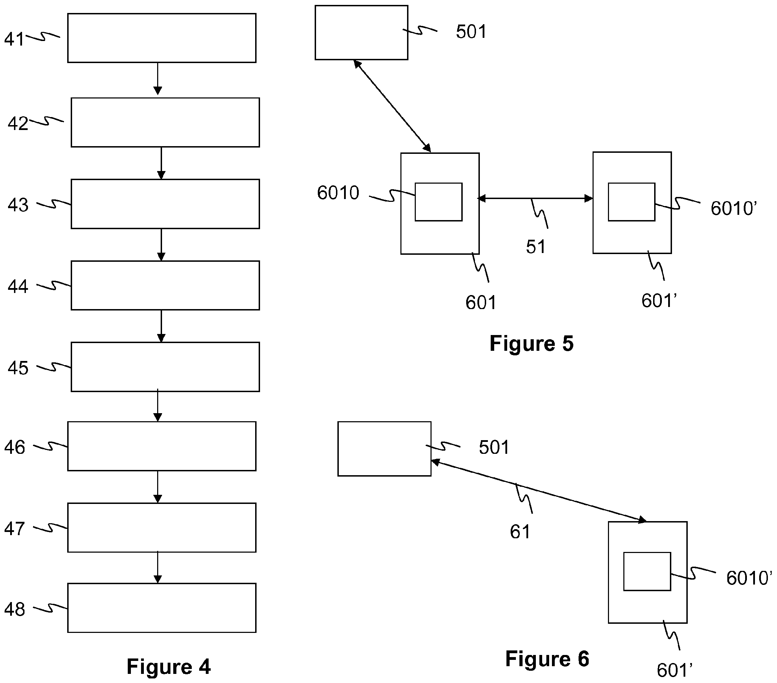

La **figure 5** illustre une première mise en oeuvre de la technique de l'invention, dans laquelle le dispositif de pointage local 501 est utilisé avec un dispositif de suivi local qui est l'équipement central 601 du système local, comme dans le contexte de la figure 1. Dans cette première mise en oeuvre, un canal de communication 51 est établi entre l'équipement central 601 du système local (qui accède à une base de données locale 6010) et l'équipement central 601' du système distant (qui accède à une base de données distante 6010'). Ainsi, dans le contexte d'un environnement personnel ou professionnel équipé d'un système d'information géographique (local) et d'un dispositif de pointage (local), la première mise en oeuvre de la technique proposée permet d'étendre les capacités de pointage et d'interaction à un autre système d'information géographique (distant). L'utilisateur peut faire usage du dispositif de pointage pour agir comme s'il se trouvait à une position déterminée dans le périmètre du système d'information géographique distant, pour y pointer des objets numériques (représentatifs d'objets réels ou virtuels) de cet environnement et interagir ainsi avec eux, ou pour les faire participer à une interaction plus globale avec des objets numériques du système d'information géographique local (également représentatifs d'objets réels ou virtuels).

La **figure 6** illustre une deuxième mise en oeuvre de la technique de l'invention, dans laquelle le dispositif de pointage local 501 n'est pas utilisé avec l'équipement central 601 du système local, contrairement au contexte de la figure 1. Dans cette deuxième mise en oeuvre, un canal de communication 61 est établi directement entre le dispositif de pointage local 501 (qui est dans ce cas le dispositif de suivi local) et l'équipement central 601' du système distant (qui accède à une base de données distante 6010'). En effet, pour pointer à distance à travers le canal de communication 51, il n'est pas nécessaire que le dispositif de pointage local 501 soit géo-localisé dans le périmètre géographique du système local. Seuls les gestes de pointage et les actions d'interaction (on suppose que le dispositif de pointage local 501 est capable de les obtenir) doivent être transmises à l'équipement central 601' du système distant, via le canal de communication 61.

En résumé, et comme détaillé par la suite, quelle que soit la (première ou deuxième) mise en oeuvre adoptée, le canal de communication 51 ou 61 permet à un utilisateur de faire usage du dispositif de pointage local 501 (bien qu'il ne soit pas présent dans le périmètre géographique du système distant) pour pointer virtuellement des objets numériques de ce système distant. En d'autres termes, l'utilisateur agit comme s'il se trouvait (avec le dispositif de pointage local qu'il manipule) à une position déterminée (précise mais toutefois configurable) dans le périmètre géographique du système distant, pour y pointer des objets numériques (représentatifs d'objets réels ou virtuels) de cet environnement et interagir ainsi avec eux.

La **figure 4** présente un organigramme d'un mode de réalisation particulier du procédé selon l'invention.

L'étape 41 est une étape de configuration de chaque système d'information géographique, y compris la création d'associations entre objets numériques du système local (ou du contexte local si le dispositif de pointage local n'est pas utilisé avec le système local) et objets numériques du système distant.

Plus précisément, dans le cas de la première mise en oeuvre illustrée sur la figure 5, les principaux éléments de configuration sont, pour chaque système SIG :
- la création d'associations entre les objets numériques de ce système SIG et d'autres systèmes SIG (par exemple en fonctions des besoins exprimés par l'utilisateur) ;
- la définition d'une position virtuelle de départ (voir le paragraphe 5.8 ci-après pour la modification de cette position virtuelle de départ, c'est-à-dire la position du dispositif de pointage dans le système distant) et d'une orientation virtuelle de départ (pour permettre le pointage des objets numériques de ce système SIG depuis d'autres systèmes SIG).

L'étape 42 est une étape de mise en relation de deux entités :
- une entité locale, à savoir l'équipement central 601 du système local (cas de la figure 5), ou bien le dispositif de pointage local 501 (cas de la figure 6), et
- une entité distante, à savoir l'équipement central 601' du système distant.

Le canal de communication 51 ou 61 est établi entre les deux entités. Les deux entités échangent des données de connexion, d'identification et de sécurisation des canaux de communication. Ils échangent également toutes informations permettant la mise en oeuvre des étapes suivantes. Ils échangent par exemple des données d'identification du dispositif de pointage local 501 (ou de chacun des dispositifs de pointage locaux, s'il y en a plusieurs concernés), ainsi que des données de positionnement virtuel (position virtuelle de départ et orientation virtuelle de départ, prédéterminées ou choisies dans l'étape de configuration 41) du dispositif de pointage local 501 dans le périmètre géographique du système distant.

L'étape de mise en relation (étape 42) peut être initiée (déclenchée) de diverses manières. Elle est par exemple déclenchée par une détection de l'un quelconque des événements suivants :
- l'équipement central 601 du système local détecte que le dispositif de pointage local 501 pointe sur la position d'un objet numérique particulier du système local (c'est-à-dire localisé dans le périmètre géographique local), provoquant une activation automatique d'une fonction particulière faisant partie des attributs de l'objet numérique particulier (c'est-à-dire une fonction associée à l'objet numérique particulier) ;
- l'équipement central 601 du système local détecte qu'un utilisateur active, via une interface homme-machine du dispositif de pointage local 501, une fonction particulière faisant partie des attributs d'un objet numérique dont la position est pointée par le dispositif de pointage local (c'est-à-dire une fonction associée à cet objet numérique) ;
- l'équipement central 601 du système local détecte qu'un utilisateur active, via une interface homme-machine du dispositif de pointage local 501, une fonction particulière associée à (c'est-à-dire faisant partie des attributs de) un objet numérique du système distant (c'est-à-dire localisé dans le périmètre géographique distant) et associé à un objet numérique localisé dans le périmètre géographique local et dont la position est pointée par le dispositif de pointage local ;
- l'équipement central 601 du système local détecte qu'un utilisateur effectue un geste particulier avec le dispositif de pointage local 501 (ce geste particulier est configuré pour être attaché à cette fonction de déclenchement de la mise en relation) ;
- un utilisateur (y inclus le cas particulier d'un administrateur) utilise une interface homme-machine de l'équipement central 601 du système local pour exécuter une fonction particulière ;
- un utilisateur (possédant les privilèges suffisants) utilise une interface homme-machine du dispositif de pointage local 501 pour envoyer une commande particulière à l'équipement central 601 du système local ou pour lancer directement une connexion avec l'équipement central 601 du système local. Dans ce dernier cas, on suppose par exemple que l'utilisateur possède les privilèges suffisants, ainsi que l'application et l'interface appropriées, lui permettant de piloter et opérer la mise en relation directement depuis le dispositif de pointage local 501, qui est par exemple un terminal mobile. Ce pilotage peut se faire grâce à une application embarquée, ou bien en composant le numéro de téléphone de l'équipement central 601' du système distant et en l'appelant (ce qui implique que l'intelligence du réseau et l'équipement central 601' du système distant rendent possible la connexion par appel téléphonique) ;
- un utilisateur utilise une application de lecture comprise dans le dispositif de pointage local 501 pour lire un code barres à deux dimensions (par exemple de type « QRcode » ou « Datamatrix ») ou une étiquette électronique (par exemple de type « tag NFC ») permettant de déclencher l'envoi d'une commande particulière à l'équipement central 601 du système local ou de lancer directement une connexion avec l'équipement central 601 du système local (la mise en relation est déclenchée par la prise en compte et la gestion automatique de tous les paramètres contenus dans le code lu ou l'étiquette lue) ;
- etc.

L'étape 42 de mise en relation est suivie d'une phase de pointage et interaction à distance (comprenant les étapes 43 à 47), elle-même est suivie d'une étape 48 de déconnexion (fin de la mise en relation des deux entités).

Dans l'étape 43, l'équipement central 601' du système distant reçoit, via le canal de communication et en provenance de l'équipement central 601 du système local (cas de la figure 5) ou du dispositif de pointage local 501 (cas de la figure 6), des informations de pointage relatives à une orientation réelle du dispositif de pointage local 501.

Dans l'étape 44, l'équipement central 601' du système distant identifie un objet numérique du périmètre géographique distant dont la position est pointée virtuellement par le dispositif de pointage local 501. Cette identification est effectuée en fonction d'une part des informations de pointage (reçues à l'étape 43) et d'autre part d'une position virtuelle de départ et d'une orientation virtuelle de départ attribuées au dispositif de pointage local 501 dans le périmètre géographique distant.

La position virtuelle de départ et l'orientation virtuelle de départ peuvent être :
- prédéterminées et stockées dans l'équipement central du système distant (elles sont par exemple définies par avance et configurées dans l'équipement central de chaque système, en utilisant une interface logicielle) ;
- calculées en fonction des caractéristiques du système distant. L'équipement central 601' du système distant détermine la position la plus « confortable » ou « performante » afin de permettre un usage optimal du dispositif de pointage local 501. Par exemple, c'est à partir de cette position qu'on peut pointer le plus rapidement vers un grand nombre d'objets numériques ;
- choisies par un utilisateur via une interface homme-machine ;
- déterminées relativement à un objet numérique du périmètre géographique distant, dont on connaît en permanence la position et qui, optionnellement, possède la capacité de se déplacer (un véhicule radiocommandé par exemple).

Dans l'étape 45, l'équipement central 601' du système distant transmet à l'équipement central 601 du système local (cas de la figure 5) ou au dispositif de pointage local 501 (cas de la figure 6), via le canal de communication, des informations d'interactions, relatives à des interactions disponibles ou effectuées sur l'objet numérique identifié à l'étape 44 (c'est-à-dire l'objet numérique dont la position est pointée virtuellement par le dispositif de pointage local 501).

Dans l'étape 46, l'équipement central 601 du système local (cas de la figure 5) ou le dispositif de pointage local 501 (cas de la figure 6) transmet à l'équipement central 601' du système distant, via le canal de communication, des commandes d'interactions, relatives à des interactions à effectuer sur l'objet numérique identifié à l'étape 44.

Dans l'étape 47, l'utilisateur reçoit, via une interface homme-machine du dispositif de pointage local 501, des informations de guidage relatives à une position virtuelle courante et une orientation virtuelle courante du dispositif de pointage local 501 dans le périmètre géographique du système distant.

Par exemple, le guidage de l'utilisateur dans le système distant peut s'effectuer à partir d'un son spatialisé 3D. A l'aide d'écouteurs connectés au dispositif de pointage local, il est possible d'émettre un son positionné dans l'espace 3D, qui pourra aider un utilisateur à orienter son dispositif de pointage local et pouvoir ainsi « atteindre un objet numérique » (c'est-à-dire pointer vers la position associée à cet objet numérique, représentatif d'un objet réel ou virtuel), dans le système distant où cet utilisateur vient de se téléporter virtuellement.

Dans une variante, l'operateur du dispositif de pointage local peut également récupérer une modélisation graphique sur une interface homme-machine (IHM) du périmètre géographique du système distant. Cette modélisation graphique est animée ou actualisée en permanence en réponse aux gestes de pointage et orientations qui sont effectués avec le dispositif de pointage local.

Dans un mode de réalisation particulier, il est possible pour l'utilisateur de pointer un objet numérique dans le système distant, de le « capturer » ou d'en récupérer un attribut (aussi appelé caractéristique, propriété ou fonctionnalité), et de l'appliquer à un objet numérique du périmètre du système local (dans lequel l'utilisateur est présent physiquement).

### 5.3 Premier exemple d'implémentation

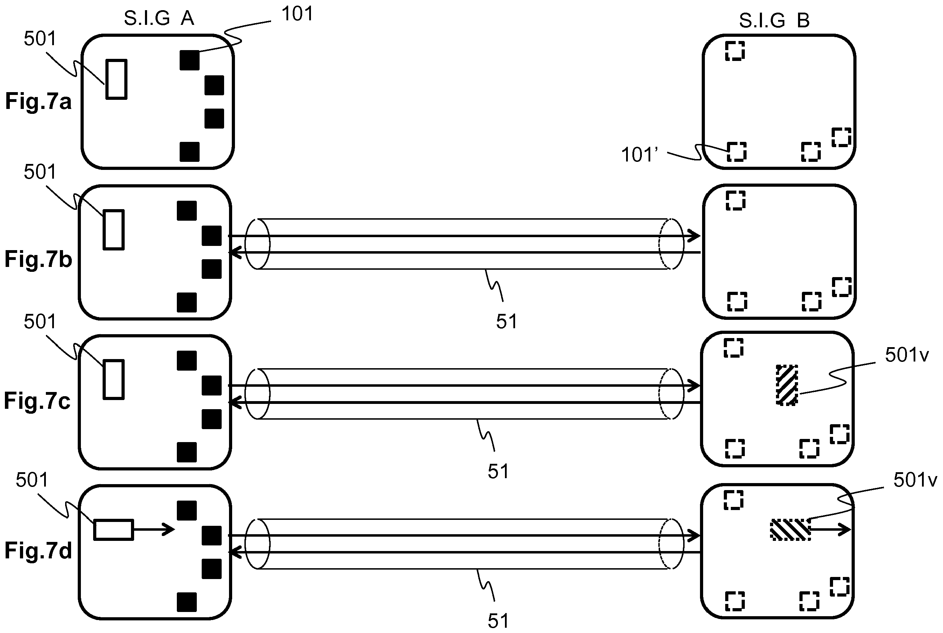

Les **figures 7a à 7f** illustrent le résultat des étapes successives de l'organigramme de la figure 4, à travers un premier exemple (correspondant à la première mise en oeuvre illustrée sur la figure 5).

Sur chacune de ces figures, la partie gauche de la figure représente de manière schématique le système local (référencé SIGA) et la partie droite de la figure représente de manière schématique le système distant (référencé SIGB). Le canal de communication est référencé 51. Le dispositif de pointage local, présent dans le périmètre géographique du système local SIGA, est référencé 501. Les objets numériques du système local sont représentés par des carrés noirs (à titre d'exemple, l'un d'entre eux est référencé 101). Les objets numériques du système distant sont représentés par des carrés blancs en pointillés (à titre d'exemple, l'un d'entre eux est référencé 101').

Chaque système (local ou distant) comprend dans son périmètre divers éléments (qui ne sont pas tous représentés sur les figures, dans un souci de simplification) : un équipement central, des équipements réseau (routeur, passerelle, décodeurs,...), des modules de localisation, un ou plusieurs dispositifs de pointage, des objets numériques référencés dans une base de données et représentatifs d'objets réels (téléviseurs, imprimantes, vidéoprojecteurs, ordinateurs, capteurs ou actionneurs domotiques) ou d'objets virtuels (papillon adhésif (post-it) virtuel par exemple).

La figure 7a illustre un état qui précède la réalisation de l'étape 42 : la mise en relation du système local SIGA avec le système distant SIGB n'a pas encore été effectuée.

La figure 7b illustre le début de l'étape 42, avec l'établissement (ouverture) du canal de communication 51 entre le système local SIGA et le système distant SIGB, par exemple à travers divers équipements réseaux et en utilisant des protocoles standardisés de l'Ethernet et du monde des télécommunications.

La figure 7c illustre la fin de l'étape 42, avec un échange de différentes données : données de connexion, données d'identification, données de sécurisation du canal de communication, données d'identification du dispositif de pointage local 501, données de positionnement virtuel (position virtuelle de départ et orientation virtuelle de départ) du dispositif de pointage local 501 dans le périmètre géographique distant (c'est-à-dire le périmètre géographique du système distant). Ainsi, le dispositif de pointage local 501 se trouve virtuellement dans le périmètre géographique distant, et cette représentation virtuelle est illustrée par le rectangle hachuré référencé 501v.

La figure 7d illustre l'étape 43, dans laquelle l'équipement central 601 du système local transmet à l'équipement central 601' du système distant, via le canal de communication, des informations de pointage relatives à une orientation réelle du dispositif de pointage local 501. Ainsi, on voit sur la figure 7d que le dispositif de pointage local 501 et sa représentation virtuelle 501v sont orientés de manière identique (ils pointent donc dans la même direction).

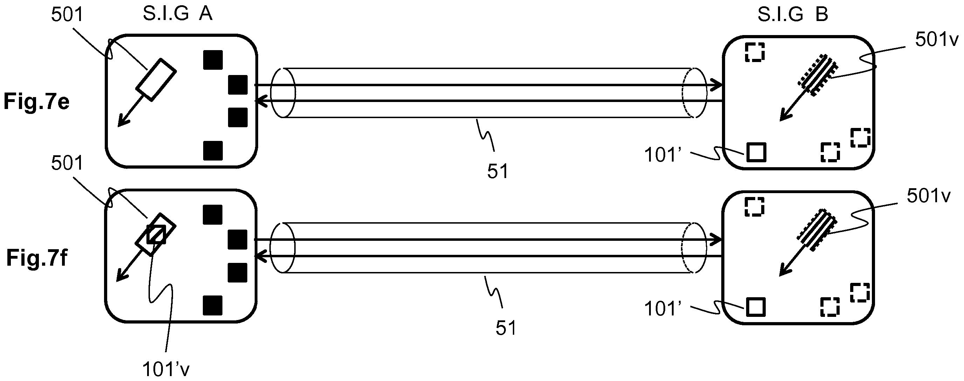

La figure 7e illustre l'étape 44, dans laquelle l'équipement central 601' du système distant identifie un objet numérique du périmètre géographique distant dont la position est pointée virtuellement par le dispositif de pointage local 501. Ainsi, on voit sur la figure 7e que la représentation virtuelle 501v du dispositif de pointage local 501 pointe en direction de l'objet numérique 101' du système distant. En d'autres termes, le dispositif de pointage local 501, bien que présent dans le périmètre du système local, pointe virtuellement en direction de l'objet numérique 101' du système distant.

La figure 7f illustre les étapes 45, 46 et 47 dans lesquelles l'équipement central 601' du système distant transmet des informations d'interactions (relatives à des interactions disponibles ou effectuées sur l'objet numérique dont la position est pointée virtuellement par le dispositif de pointage local 501) et reçoit des commandes d'interactions (relatives à des interactions à effectuer sur l'objet numérique dont la position est pointée virtuellement par le dispositif de pointage local 501). En outre, l'utilisateur reçoit, via une interface homme-machine du dispositif de pointage local 501, des informations de guidage relatives à une position virtuelle courante et une orientation virtuelle courante du dispositif de pointage local 501 dans le périmètre géographique distant. Ainsi, sur la figure 7f, le carré hachuré référencé 101'v (représentation virtuelle de l'objet numérique 101'), placé sur le dispositif de pointage local 501, symbolise le fait que ce dernier interagit avec l'objet numérique 101' du système distant.

Pour mémoire, au cours des étapes 43 à 47, il existe un échange permanent d'informations et de données (informations de pointage, informations d'interactions, commandes d'interactions, informations de guidage...) offrant à l'utilisateur la possibilité de détecter (percevoir), pointer (désigner) et interagir avec des objets numériques du périmètre géographique distant.

### 5.4 Deuxième exemple d'implémentation

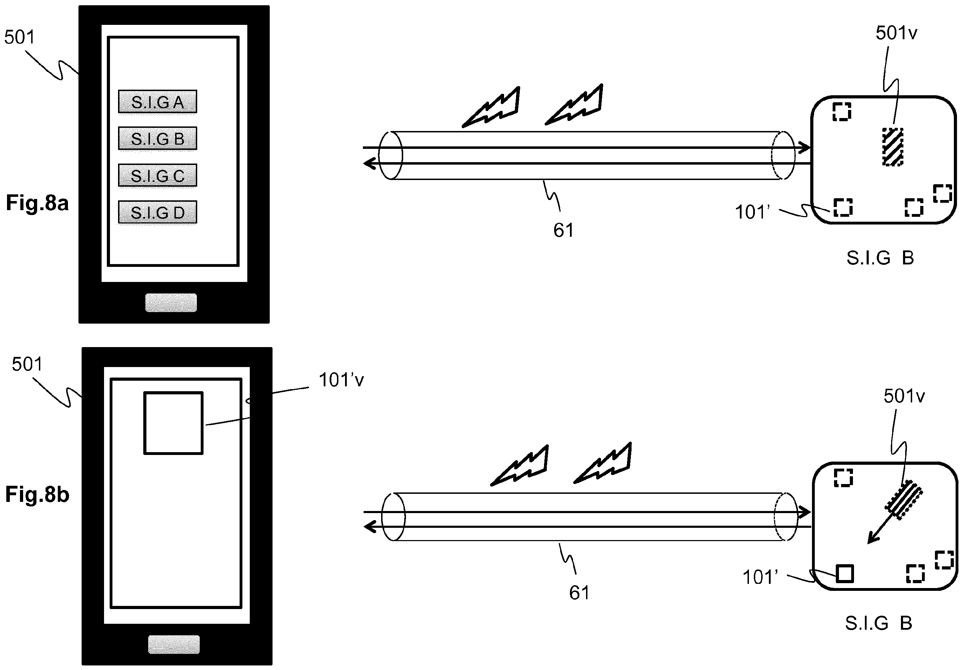

Les **figures 8a à 8d** illustrent le résultat des étapes successives de l'organigramme de la figure 4, à travers un deuxième exemple (correspondant à la deuxième mise en oeuvre illustrée sur la figure 6).

Sur chacune de ces figures, la partie gauche de la figure représente de manière schématique le dispositif de pointage local (référencé 501) et la partie droite de la figure représente de manière schématique le système distant (référencé SIGB). Le canal de communication est référencé 61. Les objets numériques du système distant sont représentés par des carrés blancs en pointillés (à titre d'exemple, l'un d'entre eux est référencé 101').

Le système distant comprend dans son périmètre divers éléments (qui ne sont pas tous représentés sur les figures, dans un souci de simplification) : un équipement central, des équipements réseau (routeur, passerelle, décodeurs,...), des modules de localisation, un ou plusieurs dispositifs de pointage, des objets numériques référencés dans une base de données et représentatifs d'objets réels (téléviseurs, imprimantes, vidéoprojecteurs, ordinateurs, capteurs ou actionneurs domotiques) ou d'objets virtuels.

On suppose que le dispositif de pointage local 501 exécute une application mobile permettant d'accéder à différents systèmes distants (symbolisés par les rectangles référencés SIGA, SIGB, SIGC et SIGD) et que l'utilisateur a sélectionné le site distant SIGB.

La figure 8a illustre l'étape 42, avec l'établissement (ouverture) du canal de communication 61 entre le dispositif de pointage local 501 et le système distant SIGB, par exemple à travers divers équipements réseaux et en utilisant des protocoles standardisés de radio communication (4G, WiFi, 3G, UMTS, etc.). Elle illustre également un échange de différentes données : données de connexion, données d'identification, données de sécurisation du canal de communication, données d'identification du dispositif de pointage local 501, données de positionnement virtuel (position virtuelle de départ et orientation virtuelle de départ) du dispositif de pointage local 501 dans le périmètre géographique du système distant. Ainsi, le dispositif de pointage local 501 se trouve virtuellement dans le périmètre géographique du système distant, et cette représentation virtuelle est illustrée par le rectangle hachuré référencé 501v.

La figure 8b illustre les étapes 43 à 47, dans lesquelles :
- le dispositif de pointage local 501 transmet à l'équipement central 601' du système distant, via le canal de communication, des informations de pointage relatives à une orientation réelle du dispositif de pointage local 501 ;
- l'équipement central 601' du système distant identifie un objet numérique du périmètre géographique distant dont la position est pointée virtuellement par le dispositif de pointage local 501. Ainsi, on voit sur la figure 8b que la représentation virtuelle 501v du dispositif de pointage local 501 pointe en direction de l'objet numérique 101' du système distant ;
- le dispositif de pointage local 501 transmet des informations d'interactions (relatives à des interactions disponibles ou effectuées sur l'objet numérique identifié, c'est-à-dire l'objet numérique dont la position est pointée virtuellement par le dispositif de pointage local 501) et reçoit des commandes d'interactions (relatives à des interactions à effectuer sur l'objet numérique identifié). En outre, l'utilisateur reçoit, via une interface homme-machine du dispositif de pointage local 501, des informations de guidage relatives à une position virtuelle courante et une orientation virtuelle courante du dispositif de pointage local 501 dans le périmètre géographique du système distant. Ainsi, sur la figure 8b, le carré hachuré référencé 101'v (représentation virtuelle de l'objet 101'), affiché sur l'écran du dispositif de pointage local 501, symbolise le fait que ce dernier interagit avec l'objet numérique 101' du système distant.

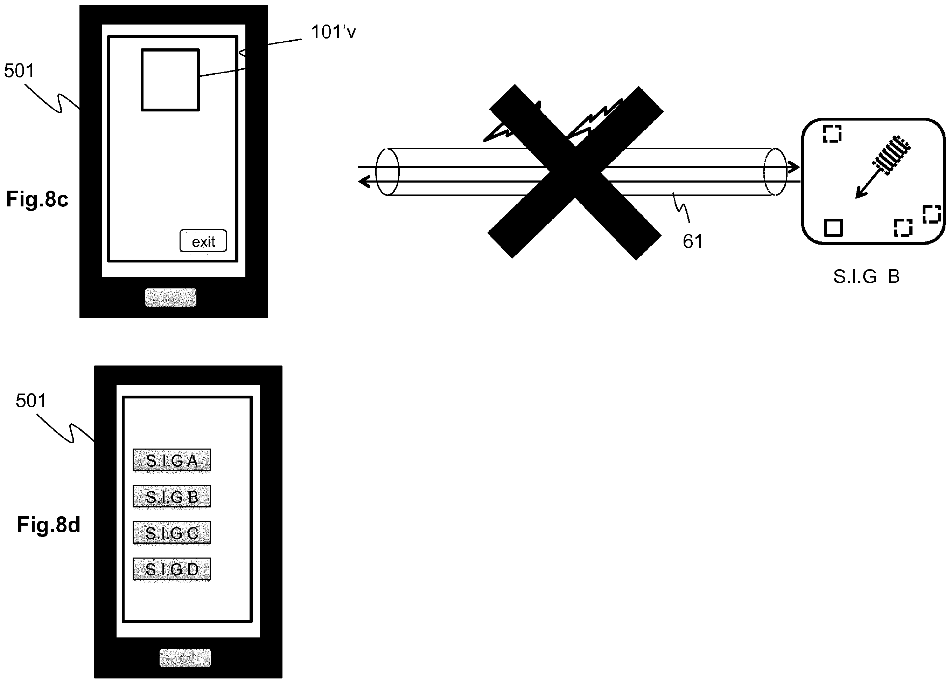

La figure 8c illustre l'étape de déconnexion 48 et la figure 8d illustre le retour au contexte d'origine (menu offrant l'accès aux différents systèmes distants SIGA, SIGB, SIGC et SIGD).

### 5.5 Structure du dispositif de pointage et de l'équipement central

Les **figures 3 et 3bis** présentent la structure du dispositif de pointage local 501 et d'un équipement central (qu'il soit local 601 ou distant 601') respectivement, selon un mode de réalisation particulier de l'invention.

Le dispositif de pointage 501 et l'équipement central 601, 601' comprennent chacun une mémoire RAM 33, 33', une unité de traitement 32, 32', équipée par exemple d'un processeur, et pilotée par un programme d'ordinateur stocké dans une mémoire ROM 31, 31'.

A l'initialisation, les instructions de code du programme d'ordinateur sont par exemple chargées dans la mémoire RAM 33, 33' avant d'être exécutées par le processeur de l'unité de traitement 32, 32', permettant ainsi au dispositif de pointage 501 et à l'équipement central 601/601' de jouer leur rôle dans les algorithmes des figures 2 et 4 (le rôle de l'équipement central 601 du système local étant différent de celui de l'équipement central 601' du système distant ; le rôle du dispositif de pointage 501 étant différent selon qu'il est utilisé avec ou sans l'équipement central 601' du système distant : cf figures 5 et 6).

Les figures 3 et 3bis illustrent seulement une manière particulière, parmi plusieurs possibles, de réaliser la technique de l'invention dans le dispositif de pointage 501 et les équipements centraux 601 et 601'. En effet, dans chacune de ces entités, la technique de l'invention se réalise indifféremment :
- sur une machine de calcul reprogrammable (un ordinateur PC, un processeur DSP ou un microcontrôleur) exécutant un programme comprenant une séquence d'instructions, ou
- sur une machine de calcul dédiée (par exemple un ensemble de portes logiques comme un FPGA ou un ASIC, ou tout autre module matériel).

Dans le cas où l'invention est implantée sur une machine de calcul reprogrammable, le programme correspondant (c'est-à-dire la séquence d'instructions) pourra être stocké dans un médium de stockage amovible (tel que par exemple une disquette, un CD-ROM ou un DVD-ROM) ou non amovible, ce médium de stockage étant lisible partiellement ou totalement par un ordinateur ou un processeur.

### 5.6 Applications

Parmi de nombreux exemples d'utilisation, on peut citer ceux-ci :
- utiliser son propre smart phone depuis sa résidence principale pour gérer (et donc positionner) des objets numériques représentatifs de post-its virtuels (objets virtuels) dans le périmètre géographique du système distant de sa résidence secondaire ;
- utiliser son propre smart phone pour placer un objet numérique représentatif d'un objet virtuel (une vidéo, un post-it, un numéro de téléphone, une adresse, un mot de passe, une liste de courses, une liste de tâche à faire, des messages de sécurité, etc ...) dans le périmètre géographique d'un système distant ;
- utiliser sa propre tablette (ou son smart phone) pour pointer et agir sur des objets numériques (représentatifs d'objets réels ou virtuels) du périmètre géographique d'un système distant placé dans un bâtiment distant ;
- utiliser son smart phone au bureau (sur son lieu de travail) pour pointer un objet numérique représentatif d'une photo (objet réel) de son domicile et ainsi pouvoir allumer le chauffage dans la salle de bain ;
- utiliser son smart phone ou une tablette depuis son domicile pour pointer un objet numérique représentatif d'une photo (objet réel) de sa boutique qui se situe en centre ville et ainsi pouvoir éteindre son enseigne électrique qui était restée allumée ;
- utiliser une camera ptz (« pan tilt zoom ») ou fixe (oeil de boeuf à mettre au plafond), ces caméras disposant actuellement de suffisamment de capacité de traitement de calcul pour leur demander de fournir une zone donnée de l'environnement. Une camera ptz tournera dans la direction de la fenêtre par exemple à la demande du dispositif de pointage ou d'un smartphone distant. Une camera fixe oeil de boeuf pourra par traitement d'images fournir uniquement la zone intéressée comme la fenêtre.

### 5.7 Création d'un nouvel objet numérique dans le système distant

Un dispositif de pointage local, bien qu'il soit dans le contexte du système local, garde la capacité de créer un nouvel objet numérique dans le système distant où il s'est « transporté ».

La création d'un nouvel objet numérique dans le système distant est par exemple effectuée en utilisant le principe de l'association d'objets numériques : j'associe un nouvel objet numérique (que je crée et que je décris) à un objet numérique (représentatif d'un objet virtuel ou réel) déjà existant dans ce système distant. Les actions de création, édition, modification, peuvent être activées par l'intermédiaire d'une IHM spécifique, ou d'une gestuelle particulière. Les étapes pour la création d'un objet numérique dans le périmètre géographique distant sont par exemple les suivantes : a) dans un menu, choisir la fonction de création ; b) décrire le nouvel objet numérique (avec ses attributs, aussi appelés propriétés) ; c) pour définir la position du nouvel objet numérique dans le périmètre géographique distant, pointer (via le canal de communication, comme décrit plus haut) un objet numérique distant déjà existant (référencé dans la base de données du système distant) et lui associer (« attacher » ) le nouvel objet numérique.

Dans une variante de la création d'un nouvel objet numérique dans le système distant, le dispositif de pointage diffuse une représentation détaillée et complète de l'environnement du système distant (par exemple, une modélisation virtuelle 2D ou 3D en image de synthèse affichée sur un écran et une IHM du dispositif de pointage). Cette représentation contient les dimensions, les positions de chaque objet numérique et de chaque élément (réel) de l'environnement (murs, portes, fenêtres), c'est-à-dire toutes les informations contenues dans la base de données du système distant. L'utilisateur peut alors manipuler, via une IHM appropriée, cette représentation et indiquer la position exacte du nouvel objet qu'il souhaite créer dans le système distant. Ceci est une alternative à l'étape c) précitée, les autres étapes (a) et b) étant inchangées.

Dans une autre variante de la création d'un nouvel objet numérique dans le système distant, le dispositif de pointage prend le contrôle d'une caméra distante (ou autre appareil portant la fonction vision) dont il peut récupérer les images. Il est alors possible, par traitement de ces images (algorithmes, programmes, calculs, etc.) de déterminer les coordonnées réelles (x,y,z), dans le périmètre géographique distant, d'un élément ou d'une position sélectionnée dans l'image. Les coordonnées ainsi déterminées servent de position du nouvel objet numérique. Ceci est une alternative à l'étape c) précitée, les autres étapes (a) et b) étant inchangées.

### 5.8 Modification de la position du dispositif de pointage dans le système distant (position virtuelle de départ)

La position du dispositif de pointage dans le système distant peut être modifiée depuis le dispositif de pointage lui-même. Ceci est par exemple effectué en sélectionnant un objet numérique connu du système distant et en utilisant ses coordonnées (connues par l'équipement central du système distant) comme nouvelle position du dispositif de pointage.

Dans une variante de la modification de la position du dispositif de pointage dans le système distant, on utilise des « objets numériques - positions », c'est-à-dire des objets numériques qui peuvent être créés, déplacés ou modifiés, de différentes manières (par l'intermédiaire d'un dispositif de pointage ou d'un outil d'administration du système). Ce type d'objet sert à définir la position d'un dispositif de pointage qui appartient à un système distant.

Dans une autre variante de la modification de la position du dispositif de pointage dans le système distant, le dispositif de pointage local obtient une représentation graphique détaillée du contexte et de l'environnement autour de sa position « transportée » dans le système distant. Par le biais d'une IHM adaptée, l'utilisateur peut piloter le déplacement de cette position, avec des touches permettant de modifier cette position (par exemple, faire avancer, reculer, déplacer à gauche ou à droite). En retour à ses actions, l'utilisateur perçoit visuellement le changement de position qui a été effectué.

Dans une autre variante de la modification de la position du dispositif de pointage dans le système distant, le dispositif de pointage prend le contrôle d'une caméra distante (ou autre appareil portant la fonction vision) dont il peut récupérer les images. Il est alors possible, par traitement de ces images (algorithmes, programmes, calculs, etc.) de déterminer les coordonnées réelles (x,y,z), dans le périmètre géographique distant, d'un élément ou d'une position sélectionnée dans l'image. Les coordonnées ainsi déterminées servent de position du nouvel objet numérique.

### 5.9 Variantes

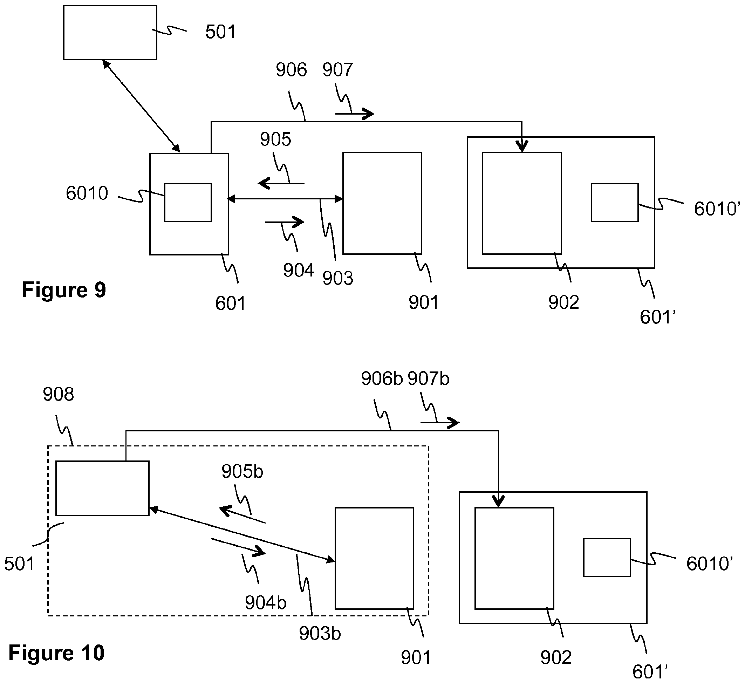

La **figure 9** illustre une troisième mise en oeuvre de la technique de l'invention, dans laquelle, comme dans la première mise en oeuvre de la figure 5, le dispositif de pointage local 501 est utilisé avec un dispositif de suivi local qui est l'équipement central 601 du système local.

On distingue deux fonctions effectuées par deux équipements distincts (alors que dans la première mise en oeuvre elles sont toutes les deux effectuées par l'équipement central 601' du système distant) :
- un dispositif d'identification 901, situé dans le périmètre géographique local mais ayant accès à la base de données distante 6010', effectue la fonction d'identification d'un objet numérique du périmètre géographique distant dont la position est pointée virtuellement par le dispositif de pointage local 501. Cette identification est effectuée en fonction d'une part des informations de pointage et d'autre part de la position virtuelle de départ et de l'orientation virtuelle de départ attribuées au dispositif de pointage local 501 dans le périmètre géographique distant ; et
- un dispositif de commande 902, situé dans le périmètre géographique distant et compris par exemple dans l'équipement central 601' du système distant, effectue la fonction de commande de l'objet numérique identifié.

Dans cette troisième mise en oeuvre, un premier canal de communication 903 est établi entre l'équipement central 601 du système local (dispositif de suivi local) et le dispositif d'identification 901 (qui accède à la base de données distante 6010'). Sur ce premier canal de communication, le dispositif de suivi local 601 transmet les informations de pointage 905 au dispositif d'identification 901, et dans l'autre sens, le dispositif d'identification 901 transmet les informations d'interactions 904 au dispositif de suivi local 601. En outre, un second canal de communication 906 est établi entre l'équipement central 601 du système local (dispositif de suivi local) et le dispositif de commande 902. Sur ce second canal de communication, le dispositif de suivi local 601 transmet les commandes d'interactions 907.

La **figure 10** illustre une quatrième mise en oeuvre de la technique de l'invention, dans laquelle, comme dans la deuxième mise en oeuvre de la figure 5, le dispositif de pointage local 501 n'est pas utilisé avec l'équipement central 601 du système local.

Comme dans la troisième mise en oeuvre de la figure 9, le dispositif d'identification 901 effectue la fonction d'identification et le dispositif de commande 902 effectue la fonction de commande de l'objet numérique identifié.

Dans cette quatrième mise en oeuvre, un premier canal de communication 903 b est établi entre le dispositif de pointage local 501 (dispositif de suivi local) et le dispositif d'identification 901 (qui accède à la base de données distante 6010'). Sur ce premier canal de communication, le dispositif de suivi local 501 transmet les informations de pointage 905b au dispositif d'identification 901, et dans l'autre sens, le dispositif d'identification 901 transmet les informations d'interactions 904b au dispositif de suivi local 501. En outre, un second canal de communication 906b est établi entre le dispositif de pointage local 501 (dispositif de suivi local) et le dispositif de commande 902. Sur ce second canal de communication, le dispositif de suivi local 501 transmet les commandes d'interactions 907b.

Dans un exemple de réalisation, le dispositif de pointage local 501 et le dispositif d'identification 901 sont regroupés dans un même dispositif référencé 908 sur la figure 10. En d'autres termes, le dispositif de pointage local 501 peut intégrer la fonction du dispositif d'identification 901.

## Revendications

1. Procédé d'interaction entre au moins un objet numérique (101'), associé à une position géographique dans un espace, et un dispositif de pointage (501),
un équipement (601', 901) accédant à une première base de données référençant un ou plusieurs objets numériques et mémorisant une position géographique dans ledit espace pour chacun de ces objets numériques,
le procédé comprenant les étapes suivantes :
- établissement (42) d'un premier canal de communication (51, 61, 903, 903b) entre l'équipement et un dispositif de suivi (601, 501), apte à obtenir des informations de pointage du dispositif de pointage ;
- réception (43), par l'équipement, via le premier canal de communication, d'informations de pointage représentant une orientation réelle du dispositif de pointage dans ledit espace ;
- obtention d'une position virtuelle de départ et d'une orientation virtuelle de départ attribuées au dispositif de pointage, ladite position virtuelle de départ étant une position géographique, dans ledit espace, différente d'une position géographique courante du dispositif de pointage ;
- identification (44), par l'équipement, en fonction d'une part des informations de pointage reçues et d'autre part de la position virtuelle de départ et de l'orientation virtuelle de départ, d'un objet numérique dont la position géographique est pointée virtuellement par le dispositif de pointage, c'est-à-dire dont la position géographique serait réellement pointée par le dispositif de pointage s'il se trouvait, dans ledit espace, à la position virtuelle de départ.

2. Procédé selon la revendication 1, **caractérisé en ce qu'**il comprend les étapes suivantes :
- transmission (45) au dispositif de suivi, via le premier canal de communication (51, 61, 903, 903b), d'informations d'interactions (904, 904b), relatives à des interactions disponibles ou effectuées sur l'objet numérique identifié ;
- transmission (46) par le dispositif de suivi vers un dispositif de commande (902), via un deuxième canal de communication (906, 906b), de commandes d'interactions (907, 907b), relatives à des interactions à effectuer sur l'objet numérique identifié.

3. Procédé selon l'une quelconque des revendications 1 et 2, dans lequel une deuxième base de données référence un ou plusieurs objets numériques et mémorise une position géographique dans ledit espace pour chacun de ces objets numériques, **caractérisé en ce que** l'étape (42) d'établissement du premier canal de communication est déclenchée par une détection d'un événement appartenant au groupe comprenant :
- le dispositif de pointage pointe sur la position d'un objet numérique particulier référencé dans la deuxième base de données, provoquant une activation automatique d'une fonction associée audit objet numérique particulier;
- un utilisateur active, via une interface homme-machine du dispositif de pointage, une fonction associée à un objet numérique référencé dans la deuxième base de données et dont la position est pointée par le dispositif de pointage ;
- un utilisateur active, via une interface homme-machine du dispositif de pointage, une fonction particulière associée à un objet numérique qui est référencé dans la première base de données et qui est associé à un objet numérique référencé dans la deuxième base de données et dont la position est pointée par le dispositif de pointage.

4. Procédé selon l'une quelconque des revendications 1 et 2, **caractérisé en ce que** l'étape (42) d'établissement du premier canal de communication est déclenchée par une détection d'un événement appartenant au groupe comprenant :
- un utilisateur effectue un geste particulier avec le dispositif de pointage ;
- un utilisateur utilise une interface homme-machine du dispositif de suivi pour exécuter une fonction particulière ;
- un utilisateur utilise une interface homme-machine du dispositif de pointage pour envoyer une commande particulière au dispositif de suivi ;
- un utilisateur utilise une interface homme-machine du dispositif de pointage pour établir une connexion avec le dispositif de suivi.

5. Procédé selon l'une quelconque des revendications 1 à 4, **caractérisé en ce que** la position virtuelle de départ et/ou l'orientation virtuelle de départ sont :
- prédéterminées et stockées dans l'équipement ; ou
- déterminées relativement à un objet numérique référencé dans la première base de données , ou
- choisies par un utilisateur via une interface homme-machine.

6. Procédé selon l'une quelconque des revendications 1 à 5, **caractérisé en ce qu'**il comprend une étape (47) de fourniture à un utilisateur, via une interface homme-machine du dispositif de pointage, d'informations de guidage relatives à une position virtuelle courante et une orientation virtuelle courante déterminées pour le dispositif de pointage dans ledit espace.

7. Procédé selon l'une quelconque des revendications 1 à 6, **caractérisé en ce qu'**il comprend une étape de création d'au moins un groupe d'objets numériques associés, chaque groupe associant au moins un objet numérique référencé dans la deuxième base de données avec au moins un objet numérique référencé dans la première base de données.

8. Procédé selon l'une quelconque des revendications 1 à 7, **caractérisé en ce qu'**il comprend une étape de création d'un nouvel objet numérique dudit espace.

9. Produit programme d'ordinateur, comprenant des instructions de code de programme pour la mise en oeuvre du procédé selon au moins une des revendications 1 à 8, lorsque ledit programme est exécuté sur un ordinateur.

10. Médium de stockage lisible par ordinateur et non transitoire, stockant un programme d'ordinateur comprenant un jeu d'instructions exécutables par un ordinateur ou un processeur pour mettre en oeuvre le procédé selon au moins une des revendications 1 à 8.

11. Equipement (601', 901) pour la mise en oeuvre d'un procédé d'interaction entre au moins un objet numérique (101'), associé à une position géographique dans un espace, et un dispositif de pointage (501),
l'équipement accédant à une première base de données référençant un ou plusieurs objets numériques et mémorisant une position dans ledit espace pour chacun de ces objets numériques, l'équipement comprenant :
- des moyens (31', 32', 33') d'établissement d'un canal de communication avec un dispositif de suivi (601, 501), apte à obtenir des informations de pointage du dispositif de pointage ;
- des moyens (31', 32', 33') de réception, via le canal de communication, d'informations de pointage représentant une orientation réelle du dispositif de pointage dans ledit espace ;
- des moyens (31', 32', 33') d'obtention d'une position virtuelle de départ et d'une orientation virtuelle de départ attribuées au dispositif de pointage, la position virtuelle de départ étant une position géographique, dans ledit espace, différente d'une position géographique courante du dispositif de pointage ;
- des moyens (31', 32', 33') d'identification, en fonction d'une part des informations de pointage reçues et d'autre part de la position virtuelle de départ et de l'orientation virtuelle de départ, d'un objet numérique dont la position géographique est pointée virtuellement par le dispositif de pointage, c'est-à-dire dont la position géographique serait réellement pointée par le dispositif de pointage s'il se trouvait, dans ledit espace, à la position virtuelle de départ.

12. Equipement selon la revendication 11, **caractérisé en ce qu'**il comprend des moyens (31', 32', 33') de transmission au dispositif de suivi, via le canal de communication, d'informations d'interactions, relatives à des interactions disponibles ou effectuées sur l'objet numérique identifié.

## Patentansprüche

1. Interaktionsverfahren zwischen mindestens einem digitalen Objekt (101'), das einer geografischen Position in einem Raum zugeordnet ist, und einer Anzeigevorrichtung (501), wobei eine Ausrüstung (601', 901) auf eine erste Datenbasis zugreift, die ein oder mehrere digitale Objekte bezeichnet und eine geografische Position in dem Raum für jedes dieser digitalen Objekte speichert,
wobei das Verfahren die folgenden Schritte umfasst:
- Herstellung (42) eines ersten Kommunikationskanals (51, 61, 903, 903b) zwischen der Ausrüstung und einer Kontrollvorrichtung (601, 501), die geeignet ist, Anzeigeinformationen von der Anzeigevorrichtung zu erhalten;
- Empfang (43) von Anzeigeinformationen, die eine reale Ausrichtung der Anzeigevorrichtung im Raum darstellen, von der Ausrüstung über den ersten Kommunikationskanal;
- Erhalt einer virtuellen Ausgangsposition und einer virtuellen Ausgangsausrichtung, die der Anzeigevorrichtung zugeordnet sind, wobei die virtuelle Ausgangsposition eine geografische Position im Raum ist, die sich von einer laufenden geografischen Position der Anzeigevorrichtung unterscheidet;
- Identifikation (44) durch die Ausrüstung in Abhängigkeit von einerseits den empfangenen Anzeigeinformationen und andererseits der virtuellen Ausgangsposition und der virtuellen Ausgangsausrichtung eines digitalen Objekts, dessen geografische Position virtuell von der Anzeigevorrichtung angezeigt wird, d.h. dessen geografische Position real von der Anzeigevorrichtung angezeigt würde, wenn es sich im Raum in der virtuellen Ausgangsposition befinden würde.

2. Verfahren nach Anspruch 1, **dadurch gekennzeichnet, dass** es die folgenden Schritte umfasst:
- Übertragung (45) an die Kontrollvorrichtung über den ersten Kommunikationskanal (51, 61, 903, 903b) von Interaktionsinformationen (904, 904b), die sich auf verfügbare oder an dem identifizierten digitalen Objekt durchgeführte Interaktionen beziehen;
- Übertragung (46) durch die Kontrollvorrichtung zu einer Steuervorrichtung (902) über einen zweiten Kommunikationskanal (906, 906b) von Interaktionsbefehlen (907, 907b), die sich auf an dem identifizierten Objekt durchzuführende Interaktionen beziehen.

3. Verfahren nach einem der Ansprüche 1 und 2, bei dem eine zweite Datenbasis ein oder mehrere digitale Objekte bezeichnet und eine geografische Position im Raum für jedes dieser digitalen Objekte speichert, **dadurch gekennzeichnet, dass** der Schritt (42) der Herstellung des ersten Kommunikationskanals durch eine Erfassung eines Ereignisses ausgelöst wird, das der Gruppe angehört, umfassend:
- die Anzeigevorrichtung zeigt auf die Position eines besonderen digitalen Objekts, das in der zweiten Datenbasis bezeichnet ist, was eine automatische Aktivierung einer dem besonderen Objekt zugeordneten Funktion hervorruft;
- ein Benutzer aktiviert über eine Mensch-Maschine-Schnittstelle der Anzeigevorrichtung eine Funktion, die einem digitalen Objekt zugeordnet ist, das in der zweiten Datenbasis bezeichnet ist, und dessen Position von der Anzeigevorrichtung angezeigt wird;
- ein Benutzer aktiviert über eine Mensch-Maschine-Schnittstelle der Anzeigevorrichtung eine besondere Funktion, die einem digitalen Objekt zugeordnet ist, das in der ersten Datenbasis bezeichnet und einem digitalen Objekt zugeordnet ist, das in der zweiten Datenbasis bezeichnet ist, und dessen Position von der Anzeigevorrichtung angezeigt wird.

4. Verfahren nach einem der Ansprüche 1 und 2, **dadurch gekennzeichnet, dass** der Schritt (42) der Herstellung des ersten Kommunikationskanals durch eine Erfassung eines Ereignisses ausgelöst wird, das der Gruppe angehört, umfassend:
- ein Benutzer führt eine besondere Bewegung mit der Anzeigevorrichtung aus;
- ein Benutzer verwendet eine Mensch-Maschine-Schnittstelle der Kontrollvorrichtung, um eine besondere Funktion auszuführen;
- ein Benutzer verwendet eine Mensch-Maschine-Schnittstelle der Anzeigevorrichtung, um einen besonderen Befehl an die Kontrollvorrichtung zu senden;
- ein Benutzer verwendet eine Mensch-Maschine-Schnittstelle der Anzeigevorrichtung, um eine Verbindung mit der Kontrollvorrichtung herzustellen.

5. Verfahren nach einem der Ansprüche 1 bis 4, **dadurch gekennzeichnet, dass** die virtuelle Ausgangsposition und/oder die virtuelle Ausgangsausrichtung:
- vorbestimmt und in der Ausrüstung gespeichert sind; oder
- in Bezug auf ein in der ersten Datenbasis bezeichnetes Objekt bestimmt sind; oder
- von einem Benutzer über eine Mensch-Maschine-Schnittstelle ausgewählt werden.

6. Verfahren nach einem der Ansprüche 1 bis 5, **dadurch gekennzeichnet, dass** es einen Schritt (47) der Lieferung von Leitinformationen zu einer laufenden virtuellen Position und einer laufenden virtuellen Ausrichtung, die für die Anzeigevorrichtung im Raum bestimmt werden, an einen Benutzer über eine Mensch-Maschine-Schnittstelle der Anzeigevorrichtung umfasst.

7. Verfahren nach einem der Ansprüche 1 bis 6, **dadurch gekennzeichnet, dass** es einen Schritt der Schaffung mindestens einer Gruppe von zugehörigen digitalen Objekten umfasst, wobei jede Gruppe mindestens ein digitales Objekt, das in der zweiten Datenbasis bezeichnet ist, mit mindestens einem digitalen Objekt, das in der ersten Datenbasis bezeichnet ist, verbindet.

8. Verfahren nach einem der Ansprüche 1 bis 7, **dadurch gekennzeichnet, dass** es einen Schritt der Schaffung eines neuen digitalen Objekts des Raums umfasst.

9. Computerprogrammprodukt, umfassend Programmcodebefehle für den Einsatz des Verfahrens nach mindestens einem der Ansprüche 1 bis 8, wenn das Programm auf einem Computer ausgeführt wird.

10. Nicht transientes und von einem Computer lesbares Speichermedium, das ein Computerprogramm speichert, umfassend einen Satz von Anweisungen, die von einem Computer oder einem Prozessor ausführbar sind, um das Verfahren nach mindestens einem der Ansprüche 1 bis 8 einzusetzen.

11. Ausrüstung (601', 901) für den Einsatz eines Interaktionsverfahrens zwischen mindestens einem digitalen Objekt (101'), das einer geografischen Position in einem Raum zugeordnet ist, und einer Anzeigevorrichtung (501),
wobei eine Ausrüstung auf eine erste Datenbasis zugreift, die ein oder mehrere digitale Objekte bezeichnet und eine geografische Position in dem Raum für jedes dieser digitalen Objekte speichert,
wobei die Ausrüstung umfasst:
- Mittel (31', 32', 33') zur Herstellung eines ersten Kommunikationskanals mit einer Kontrollvorrichtung (601, 501), die geeignet ist, Anzeigeinformationen von der Anzeigevorrichtung zu erhalten;
- Mittel (31', 32', 33') zum Empfang von Anzeigeinformationen, die eine reale Ausrichtung der Anzeigevorrichtung im Raum darstellen, über den Kommunikationskanal;
- Mittel (31', 32', 33') zum Erhalt einer virtuellen Ausgangsposition und einer virtuellen Ausgangsausrichtung, die der Anzeigevorrichtung zugeordnet sind, wobei die virtuelle Ausgangsposition eine geografische Position im Raum ist, die sich von einer laufenden geografischen Position der Anzeigevorrichtung unterscheidet;
- Mittel (31', 32', 33') zur Identifikation in Abhängigkeit von einerseits den empfangenen Anzeigeinformationen und andererseits der virtuellen Ausgangsposition und der virtuellen Ausgangsausrichtung eines digitalen Objekts, dessen geografische Position virtuell von der Anzeigevorrichtung angezeigt wird, d.h. dessen geografische Position real von der Anzeigevorrichtung angezeigt würde, wenn es sich im Raum in der virtuellen Ausgangsposition befinden würde.

12. Ausrüstung nach Anspruch 11, **dadurch gekennzeichnet, dass** sie Mittel (31', 32', 33') zur Übertragung von Interaktionsinformationen, die sich auf verfügbare oder an dem identifizierten digitalen Objekt durchgeführte Interaktionen beziehen, an die Kontrollvorrichtung über den Kommunikationskanal umfasst.

## Claims

1. Method of interaction between at least one digital object (101'), associated with a geographical position in a space, and a pointing device (501),
an apparatus (601', 901) accessing a first database referencing one or more digital objects and storing a geographical position in said space for each of these digital objects,
the method comprising the following steps:
- establishment (42) of a first communication channel (51, 61, 903, 903b) between the apparatus and a tracking device (601, 501), able to obtain pointing information in respect of the pointing device;
- reception (43), by the apparatus, via the first communication channel, of pointing information representing a real orientation of the pointing device in said space;
- obtaining of a virtual starting position and of a virtual starting orientation which are allotted to the pointing device, said virtual starting position being a geographical position, in said space, different from a current geographical position of the pointing device;
- identification (44), by the apparatus, as a function on the one hand of the pointing information received and on the other hand of the virtual starting position and of the virtual starting orientation, of a digital object whose geographical position is pointed at virtually by the pointing device, that is to say whose geographical position would really be pointed at by the pointing device if it were situated, in said space, at the virtual starting position.

2. Method according to Claim 1, **characterized in that** it comprises the following steps:
- transmission (45) to the tracking device, via the first communication channel (51, 61, 903, 903b), of interactions information (904, 904b), relating to interactions available or performed on the identified digital object;
- transmission (46) by the tracking device to a command device (902), via a second communication channel (906, 906b), of commands of interactions (907, 907b), relating to interactions to be performed on the identified digital object.

3. Method according to either one of Claims 1 and 2, in which a second database references one or more digital objects and stores a geographical position in said space for each of these digital objects, **characterized in that** step (42) of establishing the first communication channel is triggered by a detection of an event belonging to the group comprising:
- the pointing device points at the position of a particular digital object referenced in the second database, causing an automatic activation of a function associated with said particular digital object;
- a user activates, via a man-machine interface of the pointing device, a function associated with a digital object referenced in the second database and whose position is pointed at by the pointing device;
- a user activates, via a man-machine interface of the pointing device, a particular function associated with a digital object which is referenced in the first database and which is associated with a digital object referenced in the second database and whose position is pointed at by the pointing device.

4. Method according to either one of Claims 1 and 2, **characterized in that** step (42) of establishing the first communication channel is triggered by a detection of an event belonging to the group comprising:
- a user performs a particular gesture with the pointing device;
- a user uses a man-machine interface of the tracking device to execute a particular function;
- a user uses a man-machine interface of the pointing device to dispatch a particular command to the tracking device;
- a user uses a man-machine interface of the pointing device to establish a connection with the tracking device.

5. Method according to any one of Claims 1 to 4, **characterized in that** the virtual starting position and/or the virtual starting orientation are:
- predetermined and stored in the apparatus; or
- determined in relation to a digital object referenced in the first database, or
- chosen by a user via a man-machine interface.

6. Method according to any one of Claims 1 to 5, **characterized in that** it comprises a step (47) of providing a user, via a man-machine interface of the pointing device, with guidance information relating to a determined current virtual position and a determined current virtual orientation for the pointing device in said space.

7. Method according to any one of Claims 1 to 6, **characterized in that** it comprises a step of creating at least one group of associated digital objects, each group associating at least one digital object referenced in the second database with at least one digital object referenced in the first database.

8. Method according to any one of Claims 1 to 7, **characterized in that** it comprises a step of creating a new digital object of said space.

9. Computer program product, comprising program code instructions for the implementation of the method according to at least one of Claims 1 to 8, when said program is executed on a computer.

10. Computer-readable and non-transient storage medium, storing a computer program comprising a set of instructions executable by a computer or a processor for implementing the method according to at least one of Claims 1 to 8.

11. Apparatus (601', 901) for the implementation of a method of interaction between at least one digital object (101'), associated with a geographical position in a space, and a pointing device (501),
the apparatus accessing a first database referencing one or more digital objects and storing a position in said space for each of these digital objects, the apparatus comprising:
- means (31', 32', 33') for establishing a communication channel with a tracking device (601, 501), able to obtain pointing information in respect of the pointing device;
- means (31', 32', 33') for receiving, via the communication channel, pointing information representing a real orientation of the pointing device in said space;
- means (31', 32', 33') for obtaining a virtual starting position and a virtual starting orientation which are allotted to the pointing device, the virtual starting position being a geographical position, in said space, different from a current geographical position of the pointing device;
- means (31', 32', 33') for identifying, as a function on the one hand of the pointing information received and on the other hand of the virtual starting position and of the virtual starting orientation, of a digital object whose geographical position is pointed at virtually by the pointing device, that is to say whose geographical position would really be pointed at by the pointing device if it were situated, in said space, at the virtual starting position.

12. Apparatus according to Claim 11, **characterized in that** it comprises means (31', 32', 33') for transmitting to the tracking device, via the communication channel, interactions information, relating to interactions available or performed on the identified digital object.
